# EUROPEAN PATENT APPLICATION

(11) **EP 3 979 182 A1**
(43) Date of publication of application: **06.04.2022**
(21) Application number: 19930801.6
(22) Date of filing: 30.05.2019
(51) Int. Cl.: G06Q 50/30, G07C 9/00

(54) **INFORMATION PROCESSING DEVICE, INFORMATION PROCESSING METHOD, AND RECORDING MEDIUM**

(71) Applicant: NEC Corporation, 108-8001 Tokyo (JP)
(72) Inventor: HATAE, Tomohiro, Tokyo 108-8001 (JP); SAKAGUCHI, Osamu, Tokyo 108-8001 (JP); AOKI, Yoji, Tokyo 108-8001 (JP)
(74) Representative: Betten & Resch
(86) International application number: PCT/JP2019/021648
(87) International publication number: WO 2020/240801

(57) **Abstract**

An information processing apparatus according to the present invention includes: an issue unit that issues an identifier for associating the registered biometrics information of the user with business information related to a predetermined business; and a control unit that controls a validity period of the identifier.

## Description

### [Technical field]

The present invention relates to an information processing apparatus, an information processing method, and a storage medium.

### [Background Art]

Patent Literature 1 discloses a boarding security check system having a plurality of databases in which a customer code for uniquely identifying a user is associated to each of a user's face image captured in a booth for security inspection, boarding reservation information inputted by the user at the time of reservation, and identity information of the user. The system permits the user to pass through the boarding gate when the face image of the user captured at the boarding gate matches the face image registered in the database.

### [Citation List]

### [Patent Literature]

PTL 1: International publication No.2005/055151

### [Summary of Invention]

### [Technical Problem]

The system described in Patent Literature 1 is configured to associate data with the customer code. However, from an information security aspect, it may not be appropriate to associate data using persistently used identification information such as the customer code.

In view of the above-described problems, an object of the present invention is to provide an information processing apparatus, an information processing method, and a storage medium that associate data at a high security level.

### [Solution to Problem]

According to one aspect of the present invention, there is provided an information processing apparatus including: an issue unit that issues an identifier for associating the registered biometrics information of the user with business information related to a predetermined business; and a control unit that controls a validity period of the identifier.

According to another aspect of the present invention, there is provided an information processing method including: issuing an identifier for associating the registered biometrics information of the user with business information related to a predetermined business; and controlling a validity period of the identifier.

According to yet another aspect of the present invention, there is provided a storage medium storing a program that causes a computer to execute: issuing an identifier for associating the registered biometrics information of the user with business information related to a predetermined business; and controlling a validity period of the identifier.

### [Advantageous Effects of Invention]

According to the present invention, it is possible to provide an information processing apparatus, an information processing method, and a storage medium that associate data at a high security level.

### [Brief Description of Drawings]

[FIG. 1] FIG. 1 is a block diagram illustrating an example of the overall configuration of an information processing system according to a first example embodiment.
[FIG. 2] FIG. 2 is a diagram illustrating an example of information stored in a token ID information database according to the first example embodiment.
[FIG. 3] FIG. 3 is a diagram illustrating an example of information stored in a passage history information database according to the first example embodiment.
[FIG. 4] FIG. 4 is a diagram illustrating an example of information stored in a business information database according to the first example embodiment.
[FIG. 5] FIG. 5 is a block diagram illustrating an example of a hardware configuration of a management server according to the first example embodiment.
[FIG. 6] FIG. 6 is a block diagram illustrating an example of a hardware configuration of a check-in terminal according to the first example embodiment.
[FIG. 7] FIG. 7 is a block diagram illustrating an example of a hardware configuration of an automatic baggage deposit machine according to the first example embodiment.
[FIG. 8] FIG. 8 is a block diagram illustrating an example of a hardware configuration of a security inspection apparatus according to the first example embodiment.
[FIG. 9] FIG. 9 is a block diagram illustrating an example of a hardware configuration of an automated gate apparatus according to the first example embodiment.
[FIG. 10] FIG. 10 is a block diagram illustrating an example of a hardware configuration of a boarding gate apparatus according to the first example embodiment.
[FIG. 11] FIG. 11 is a sequence diagram illustrating an example of processing of the check-in terminal and the management server according to the first example embodiment.
[FIG. 12] FIG. 12 is a diagram illustrating an example of a screen displayed on the check-in terminal according to the first example embodiment.
[FIG. 13] FIG. 13 is a sequence diagram illustrating an example of processing of the automatic baggage deposit machine and the management server according to the first example embodiment.
[FIG. 14] FIG. 14 is a sequence diagram illustrating an example of processing of the security inspection apparatus and the management server according to the first example embodiment.
[FIG. 15] FIG. 15 is a sequence diagram illustrating an example of processing of the automated gate apparatus and the management server according to the first example embodiment.
[FIG. 16] FIG. 16 is a sequence diagram illustrating an example of processing of the boarding gate apparatus and the management server according to the first example embodiment.
[FIG. 17] FIG. 17 is a block diagram illustrating an example of the overall configuration of an information processing system according to a second example embodiment.
[FIG. 18] FIG. 18 is a block diagram illustrating an example of a hardware configuration of an automatic ticket vending machine according to the second example embodiment.
[FIG. 19] FIG. 19 is a block diagram illustrating an example of a hardware configuration of a POS terminal according to the second example embodiment.
[FIG. 20] FIG. 20 is a sequence diagram illustrating an example of processing of the automatic ticket vending machine and the management server according to the second example embodiment.
[FIG. 21] FIG. 21 is a diagram illustrating an example of a screen displayed on the automatic ticket vending machine according to the second example embodiment.
[FIG. 22] FIG. 22 is a sequence diagram illustrating an example of processing of the POS terminal and the management server according to the second example embodiment.
[FIG. 23] FIG. 23 is a block diagram illustrating an example of the overall configuration of an information processing apparatus according to a third example embodiment.
[FIG. 24] FIG. 24 is a block diagram illustrating an example of the overall configuration of an information processing system according to a modified example embodiment.

### [Description of Embodiments]

Exemplary example embodiments of the disclosure will be described below with reference to the drawings. Throughout the drawings, similar features or corresponding features are labeled with the same references, and the description thereof may be omitted or simplified.

### [First example embodiment]

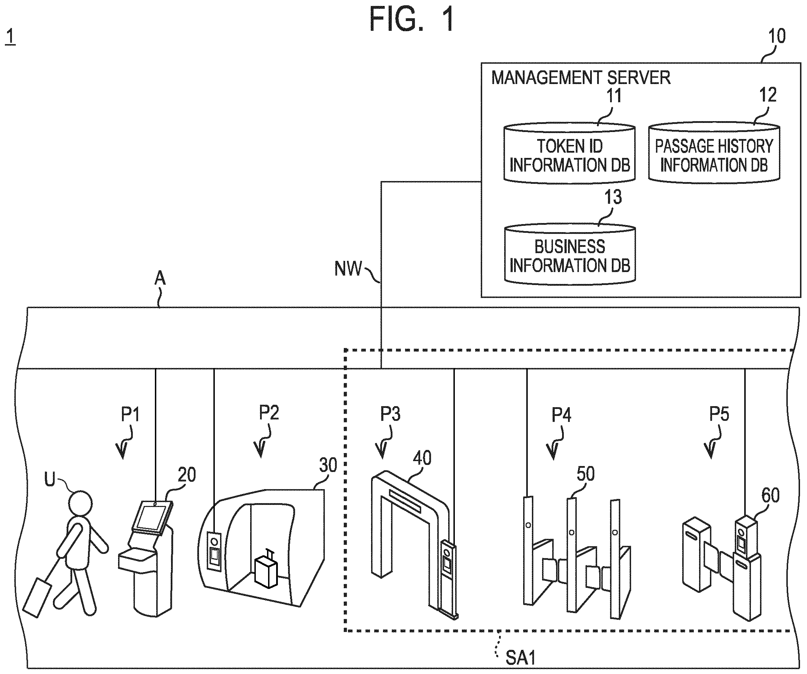

FIG. 1 is a schematic diagram illustrating an overall configuration example of an information processing system 1 according to the present example embodiment. The information processing system 1 is a computer system for supporting business related to a series of examination procedures for a user (traveler) U departing from an airport A of a first country for a second country by aircraft. The information processing system 1 is operated by, for example, a public institution such as an immigration bureau or a trustee entrusted with services by the institution.

In the information processing system 1 of the present example embodiment, a check-in terminal 20, an automatic baggage deposit machine 30, a security inspection apparatus 40, an automated gate apparatus 50 and a boarding gate apparatus 60 are connected to a common management server 10 via a network NW, respectively. The security inspection apparatus 40, the automated gate apparatus 50, and the boarding gate apparatus 60 are installed in a security area SA1 illustrated by a broken line. The network NW includes a Local Area Network (LAN) having a local area communication network of the airport A, a Wide Area Network (WAN), a mobile communication network, and the like. The connection system is not limited to the wired system, but may be a wireless system. In FIG. 1, for convenience of explanation, only a terminal device (business terminal) used for procedures at the time of departure at the airport A is illustrated.

The management server 10 is an information processing apparatus for managing the business related to the examination procedures when a user U enters or leaves the country. The management server 10 is installed, for example, in a facility such as an airport company or an airline company that operates the airport A. The management server 10 may be a cloud server instead of a server installed in a facility where actual operations are performed. The management server 10 needs not be a single server, and may be configured as a server group including a plurality of servers. As illustrated in FIG. 1, the examination procedures at the time of departure at the airport A are sequentially performed at five touch points P1 to P5. The relationship between each device and the touch points P1 to P5 will be described below.

The check-in terminal 20 is installed in a check-in lobby (Hereinafter, it is referred to as "touch point P1".) in the airport A. The check-in terminal 20 is a self-service terminal for the user U to perform a check-in procedure by oneself. The check-in procedure is a procedure to register information for identifying the user U scheduled to board an aircraft. Upon completion of the procedure at the touch point P1, the user U moves to a baggage counter or a security inspection site.

The automatic baggage deposit machine 30 is installed in the baggage counter (Hereinafter, it is referred to as "touch point P2".) in the airport A. The automatic baggage deposit machine 30 is a self-service terminal which is operated by the user U to perform a deposit procedure (a baggage deposit procedure) for baggage which the user U does not carry into the aircraft. Upon completion of the procedure at the touch point P2, the user U moves to the security inspection site. When the user U does not deposit the baggage, the procedure at the touch point P2 is omitted.

The security inspection apparatus 40 is installed in the security inspection site (Hereinafter, it is referred to as "touch point P3".) in the airport A. The security inspection apparatus 40 is an apparatus for confirming by a metal detector gate whether or not the user U is wearing metals which can be dangerous materials. Note that, the security inspection apparatus 40 includes, in addition to a metal detector, as well as an X-ray inspection device that uses X-rays to check the presence or absence of dangerous objects in the carry-on baggage and the like. The user U who has completed the check-in procedure or the automatic baggage deposit procedure performs the security inspection procedure by the security inspection apparatus 40 at the security inspection site. Upon completion of the procedure at the touch point P3, the user U moves to the departure examination site.

The automated gate apparatus 50 is installed in a departure examination site (Hereinafter referred to as "touch point P4".) in the airport A. The automated gate apparatus 50 is an apparatus that automatically performs a departure examination procedure of the user U. When the user U completes the procedure at the touch point P4, the user U moves to a departure area where a duty-free shop and a boarding gate are provided.

The boarding gate apparatus 60 is a traffic control apparatus installed at each boarding gate (Hereinafter referred to as "touch point P5".) in the departure area. The boarding gate apparatus 60 confirms that the user U is a passenger of the aircraft which can be boarded from the boarding gate. Upon completion of the procedure at the touch point P5, the user U boards the aircraft to leave the country.

As illustrated in FIG. 1, the management server 10 includes a token ID information DB11, a passage history information DB12, and a business information DB13. The databases of the management server 10 are not limited to these databases.

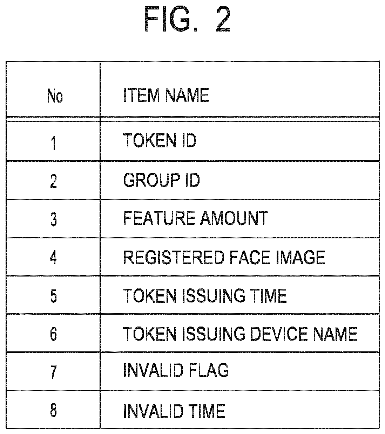

FIG. 2 is a diagram illustrating an example of information stored in the token ID information DB11. The token ID information DB11 includes token ID, group ID, feature amount, registered face image, token issuing time, token issuing device name, invalid flag, and invalid time as data items. The token ID is an identifier that uniquely identifies ID information. In the present example embodiment, the token ID is temporarily issued on the condition that the face image of the passport read from the passport at the touch point P1 matches the face image of the user U holding the passport. When the user U completes the procedure at the touch point P5 (boarding gate), the token ID is invalidated. That is, the token ID is a one-time ID having a validity period (life cycle).

The group ID is an identifier for grouping the ID information. The feature amount is a value extracted from the biometrics information. The registered face image is a face image that is registered about the user U. The term of the biometrics information according to the present example embodiment denotes a face image and a feature amount extracted from the face image, but the biometrics information is not limited to the face image and the face feature amount. That is, the biometrics authentication may be performed using a fingerprint image, a palm print image, an auricle image, an iris image, or the like as the biometrics information of the user U.

The token issuing time is a time when the management server 10 issues the token ID. The token issuing device name is a device name of the device that acquired the registered face image that triggered the issuance of the token ID. The invalid flag is flag information indicating whether or not the token ID is currently valid. When the token ID is issued, the invalid flag becomes a value of "1" indicating a valid state of the token ID. When a predetermined condition is satisfied, the invalid flag is updated to a value "0" indicating an invalid state of the token ID. The invalid time is a timestamp when the invalid flag was invalidated.

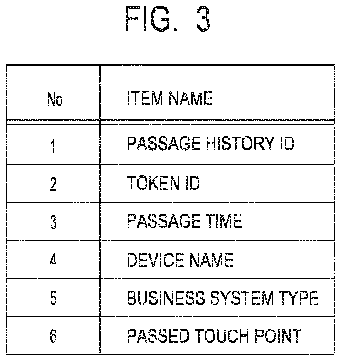

FIG. 3 is a diagram illustrating an example of information stored in the passage history information DB12. The passage history information DB12 includes passage history ID, token ID, passage time, device name, business system type, and passed touch point as data items. The passage history ID is an identifier for uniquely identifying the passage history information. The passage time is a timestamp when the user U passes through the touch point. The device name is a device name of the business terminal used for the procedure at the touch point. The business system type is a type of the business system to which the business terminal belongs. The management server 10 can determine to which touch point the user U has completed the procedure by extracting the passage history information for each token ID.

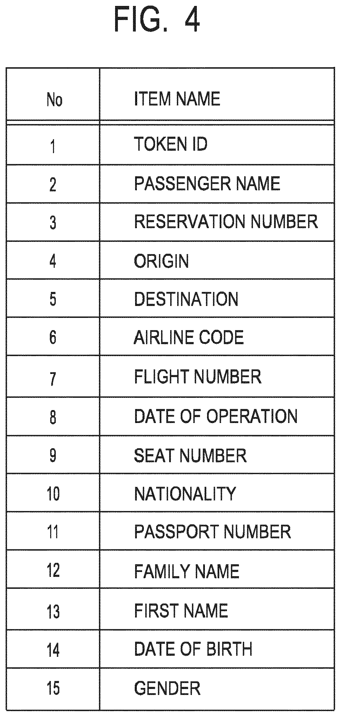

FIG. 4 is a diagram illustrating an example of information stored in the business information DB13. The business information DB13 includes token ID, passenger name, reservation number, origin, destination, airline code, flight number, date of operation, seat number, nationality, passport number, family name, first name, date of birth, and gender as data items. In this manner, the business information DB13 stores business information related to a predetermined business for each the token ID. In the present example embodiment, "predetermined business" denotes procedural business performed at touch points P1 to P5, respectively.

The reservation number is an identifier for uniquely identifying reservation information of the boarding ticket. The airline code is an identifier for uniquely identifying an airline. Information such as passenger name, the reservation number, the origin, the destination, the airline code, the flight number, the date of operation, the seat number, the nationality, the passport number, the family name, the first name, the date of birth, and the gender can be obtained from a medium such as the passport and the boarding ticket. Alternatively, the information can be obtained from a database (not illustrated) for managing the reservation information by using a passport number or a reservation number as a key.

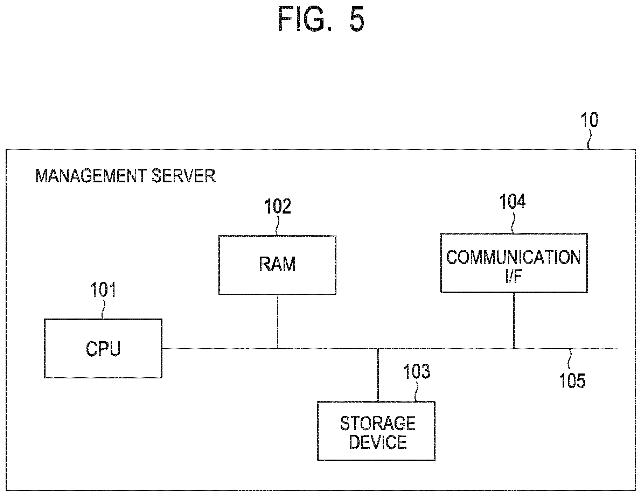

Next, with reference to FIGS. 5 to 10, an example of a hardware configuration of each device constituting the information processing system 1 will be described. Note that, in FIGS. 5 to 10, devices having the same name but different only by reference numerals are devices having the same function, and therefore detailed description thereof is omitted in the following drawings.

FIG. 5 is a block diagram illustrating an example of the hardware configuration of the management server 10. As illustrated in FIG. 5, the management server 10 includes a Central Processing Unit (CPU) 101, a Random Access Memory (RAM) 102, a storage device 103, and a communication I/F 104. Each device is connected to a bus line 105.

The CPU 101 is a processor having a function of performing a predetermined operation according to a program stored in the storage device 103 and controlling each part of the management server 10. In the management server 10, the CPU 101 functions as an issue unit, a control unit, a matching unit, and an output unit. The RAM 102 is formed of a volatile storage medium and provides a temporary memory area necessary for the operation of the CPU 101.

The storage device 103 is formed of a storage medium such as a nonvolatile memory, a hard disk drive, or the like, and functions as a storage unit. The storage device 103 stores a program executed by the CPU 101, data referred to by the CPU 101 in executing the program, and the like. In the present example embodiment, the token ID information DB11 or the like corresponds to the storage unit.

The communication I/F 104 is a communication interface based on standards such as Ethernet (registered trademark), Wi-Fi (registered trademark), 4G, etc., and is a module for communicating with the check-in terminal 20, etc.

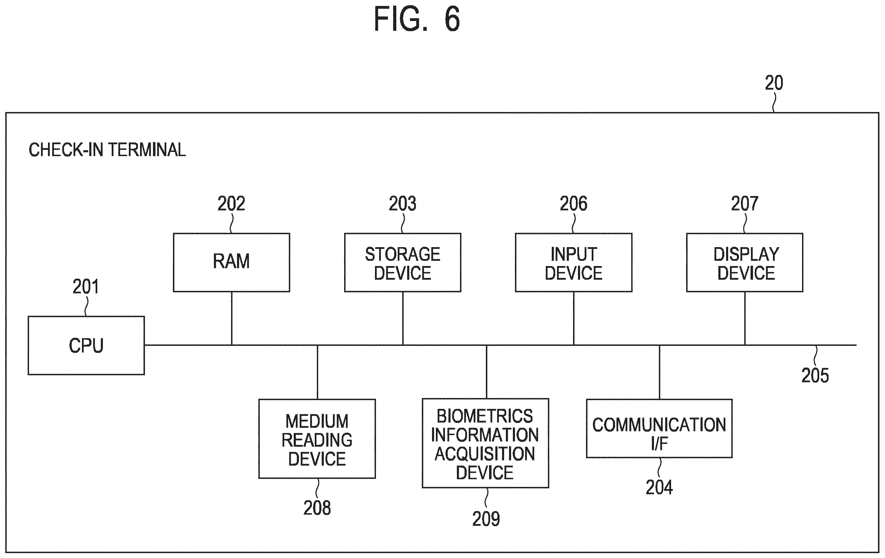

FIG. 6 is a block diagram illustrating an example of the hardware configuration of the check-in terminal 20. As illustrated in FIG. 6, the check-in terminal 20 includes a CPU 201, a RAM 202, a storage device 203, a communication I/F 204, an input device 206, a display device 207, a medium reading device 208, and a biometrics information acquisition device 209. Each device is connected to a bus line 205.

The input device 206 is, for example, a pointing device such as a touch panel or a keyboard. In the check-in terminal 20 of the present example embodiment, the display device 207 and the input device 206 are assumed to be integrally formed as a touch panel. The display device 207 is a liquid crystal display device, an OLED (Organic Light Emitting Diode) display device, or the like, and is used for displaying moving images, still images, characters, and the like.

The medium reading device 208 is a device for reading the passport and the flight ticket medium of the user U and acquiring information recorded in the passport and the flight ticket. The flight ticket medium is, for example, a paper flight ticket or a portable terminal for displaying a copy of an e-ticket. The medium reading device 208 has, for example, a code reader, an image scanner, a non-contact integrated circuit (IC) reader, an optical character reader (OCR) device, and the like, and acquires information from various media held over by the reading unit thereof.

The biometrics information acquisition device 209 is a device for acquiring a face image of the user U as biometrics information of the user U. The biometrics information acquisition device 209 is, for example, a digital camera for capturing a face of the user U standing in front of the check-in terminal 20, and captures a face of the user U to acquire the face image.

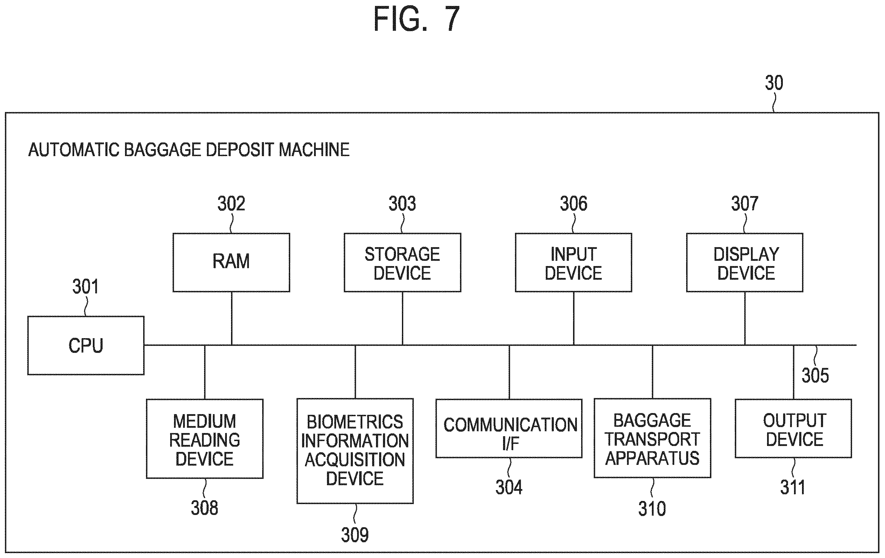

FIG. 7 is a block diagram illustrating an example of a hardware configuration of the automatic baggage deposit machine 30. As illustrated in FIG. 7, the automatic baggage deposit machine 30 includes a CPU 301, a RAM 302, a storage device 303, a communication I/F 304, an input device 306, a display device 307, a medium reading device 308, a biometrics information acquisition device 309, a baggage transport apparatus 310, and an output device 311. Each device is connected to a bus line 305.

The baggage transport apparatus 310 transports baggage to load the baggage on an aircraft which the user U boards when identity verification of the user U is successful. The baggage transport apparatus 310 transports baggage placed on a receiving part by the user U and attached with a baggage tag toward a cargo sorting site.

The output device 311 is a device that outputs a baggage tag to be attached to deposited baggage. The output device 311 outputs a baggage claim tag necessary for claiming the baggage after arriving at the destination. The baggage tag and baggage claim tag are associated with at least any one of the passport information and the boarding information.

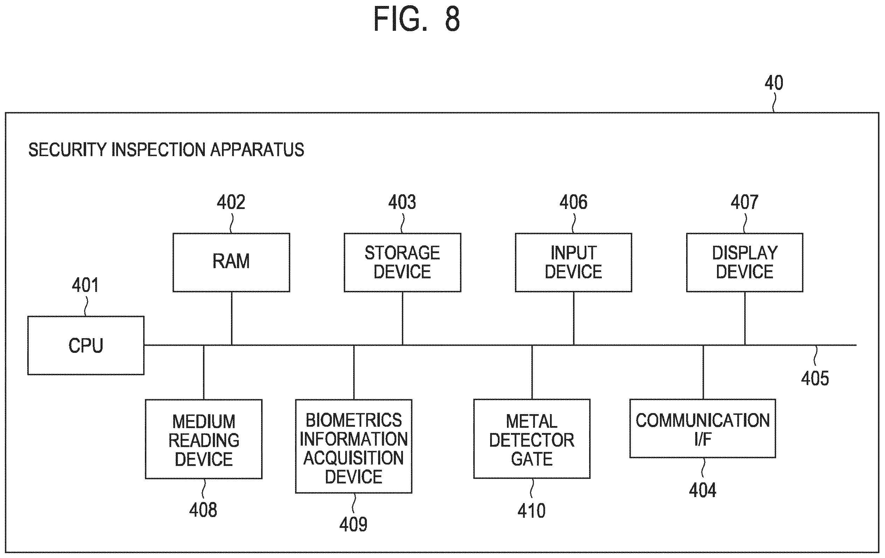

FIG. 8 is a block diagram illustrating an example of the hardware configuration of the security inspection apparatus 40. As illustrated in FIG. 8, the security inspection apparatus 40 includes a CPU 401, a RAM 402, a storage device 403, a communication I/F 404, an input device 406, a display device 407, a medium reading device 408, a biometrics information acquisition device 409, and a metal detector gate 410. Each device is connected to a bus line 405.

The metal detector gate 410 is a gate type metal detector for detecting metals carried by the user U passing through the metal detector gate 410.

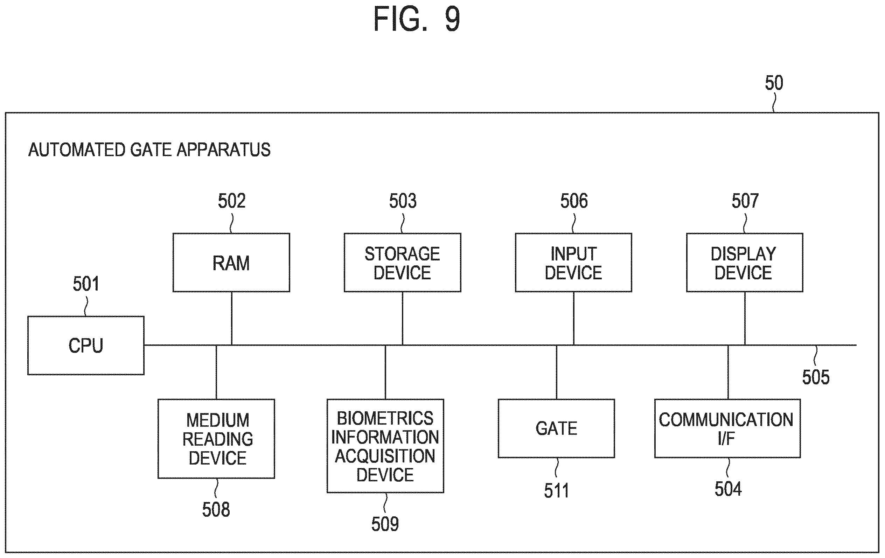

FIG. 9 is a block diagram illustrating an example of the hardware configuration of the automated gate apparatus 50. The automated gate apparatus 50 includes a CPU 501, a RAM 502, a storage device 503, a communication I/F 504, an input device 506, a display device 507, a medium reading device 508, a biometrics information acquisition device 509, and a gate 511. Each device is connected to a bus line 505. The automated gate apparatus 50 disposed at the immigration examination site has the same hardware configuration as the automated gate apparatus 50 disposed at the departure examination site.

When identity verification of the user U is successful in the automated gate apparatus 50 and the user U passes through the departure examination, the gate 511 transitions from a closed state for a standby to block passage of the user U to an opened state to permit passage of the user U under the control of the CPU 501. The system of gate 511 is not particularly limited, and may be, for example, a flapper gate in which one or more flappers provided on one side or both sides of the passage are opened or closed, a turn-style gate in which three bars are revolved.

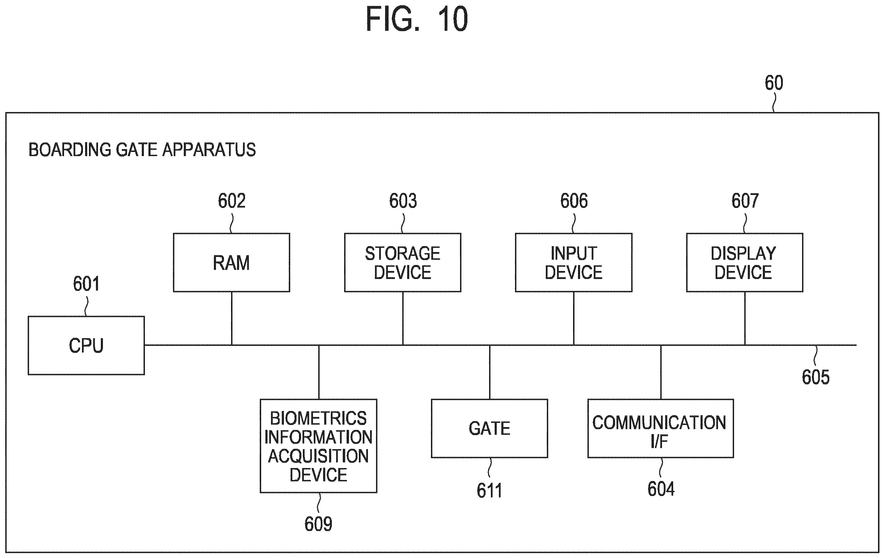

FIG. 10 is a block diagram illustrating an example of a hardware configuration of the boarding gate apparatus 60. As illustrated in FIG 10, the boarding gate apparatus 60 includes a CPU 601, a RAM 602, a storage device 603, a communication I/F 604, an input device 606, a display device 607, a biometrics information acquisition device 609, and a gate 611. Each device is connected to a bus line 605.

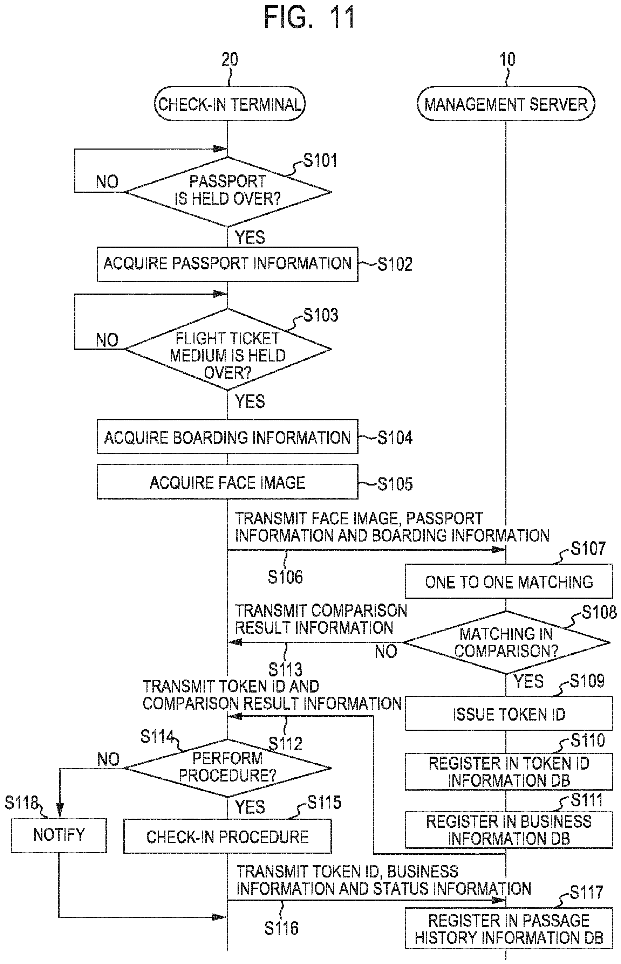

Next, the operation of each device according to the information processing system 1 in the present example embodiment will be described with reference to FIGS. 11 to 16.

### [Check-in procedure]

FIG. 11 is a sequence diagram illustrating an example of processing of the check-in terminal 20 and the management server 10. This processing is executed each time the user U performs the check-in procedure using the check-in terminal 20.

First, the check-in terminal 20 determines whether or not the passport of the user U is held over the reading unit (not illustrated) of the medium reading device 208 (step S101), and waits until the passport is held over the reading unit (NO in step S101).

Next, when the check-in terminal 20 determines that the passport is held over the reading unit of the medium reading device 208 (YES in step S101), the check-in terminal 20 acquires passport information of the user U from the held passport (step S102). The obtained passport information includes a passport face image of the user U, the identity information, and information of the passport number and a passport issuing country of the user U, etc.

Next, the check-in terminal 20 determines whether or not the flight ticket medium of the user U is held over the reading unit of the medium reading device 208 (step S103), and waits until the flight ticket medium is held over (NO in step S103).

Next, when the check-in terminal 20 determines that the flight ticket medium is held over the reading unit of the medium reading device 208 (YES in step S103), the check-in terminal 20 acquires boarding information of the user U from the held flight ticket medium (step S104) . At this time, the medium reading device 208 can acquire the boarding information (family name, first name, airline code, flight number, boarding date, origin (boarding airport), destination (arrival airport), sheet number, boarding time, arrival time, etc.) of the user U from the flight ticket medium.

Next, the check-in terminal 20 captures a face of the user U by the biometrics information acquisition device 209, and acquires the face image as a target face image (step S105). It is preferable to display a screen for obtaining the consent of the user U before capturing the face image.

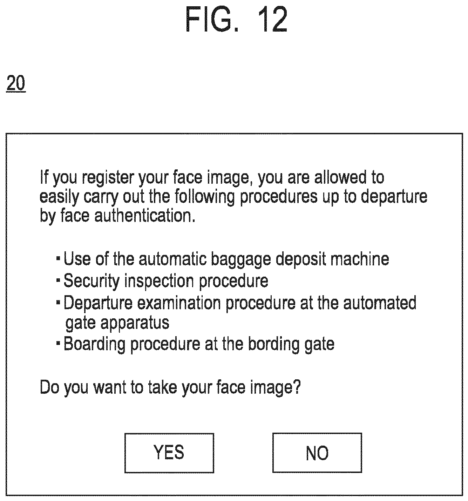

FIG. 12 is a diagram illustrating an example of a screen displayed on the check-in terminal 20. Here, a description of the capturing of the face image ("If you register your face image, you are allowed to easily carry out the following procedures up to departure by face authentication.") and a button for selecting whether or not to capture the face image are displayed.

Next, the check-in terminal 20 transmits the captured target face image, the passport information and the boarding information to the management server 10 (step S106).

Upon receiving the information from the check-in terminal 20, the management server 10 compares the passport face image of the user U and the target face image captured by the check-in terminal 20 with one to one matching (step S107) .

Next, as a result of the comparison, if the management server 10 determines that there is a matching in the comparison of the passport face image and the target face image (YES in step S108), the management server 10 issues a token ID (step S109). The token ID is set to a unique value based on, for example, the date and time at the time of processing or the sequence number.

Next, the management server 10 registers the relationship between the token ID and the registered face image in the token ID information DB11 with the target face image as the registered face image (step S110).

In the present example embodiment, the reasons for using a face image (target face image) captured on the spot as a registered face image include that the validity period (life cycle) of the token ID is completed within the day, that the quality (appearance) of the captured image is closer to that of the image captured in the subsequent authentication process than that of the passport face image, and the like. However, instead of the target face image (captured face image), the passport face image may be set as the registered face image (registered biometrics information). For example, when the life cycle of the token ID is long (For example, in the aviation industry, when the users are a member, the token ID may be set valid only for a certain validity period.), a face image of the passport or the license may be set as the registered face image.

Next, the management server 10 registers the relationship between the token ID and the business information in the business information DB13 using the passport information and the boarding information as the business information (step S111). That is, although the control data necessary for face authentication and the business information necessary for execution of the business are managed in separate databases, the registered face image and the business information are related by the token ID. The control data in the present example embodiment means data including the registered face image to be compared with the target face image in face authentication and various data items such as an invalid flag (see FIG. 2). Various data items such as an invalid flag are associated with the token ID together with the registered face image.

Next, the management server 10 transmits the issued token ID and comparison result information indicating a matching in the comparison to the check-in terminal 20 (step S112) .

On the other hand, as a result of the comparison, if the management server 10 determines that there is no matching in the comparison of the passport face image and the target face image (NO in step S108), the management server 10 transmits comparison result information indicating no matching to the check-in terminal 20 (step S113).

Next, when the check-in terminal determines that the check-in procedure can be performed based on comparison result that indicates a matching and is received from the management server 10 (YES in step S114), the check-in terminal 20 performs the check-in procedure such as the confirmation of the itinerary or the selection of the seat based on the input information of the user U (step S115). Then, the check-in terminal 20 transmits the token ID, the business information, and the status information indicating the completion of the procedure in the check-in terminal 20 to the management server 10 (step S116). It is assumed that the status information includes information such as a time of passing the touch point and a device name of the used terminal.

Next, upon receiving the information from the check-in terminal 20, the management server 10 registers the passage history information indicating the relationship between the token ID and the passage information of the touch point P1 in the passage history information DB12 (step S117) . The management server 10 updates the business information DB13 based on the business information received from the check-in terminal 20 as necessary.

On the other hand, when the check-in terminal 20 determines that the check-in procedure cannot be performed based on comparison result of no matching received from the management server 10 (NO in step S114), the check-in terminal 20 notifies the user U of an error message (step S118).

In this way, the target face image (captured face image) that matches the passport face image acquired from the passport in the check-in procedure is registered as a registered face image in the token ID information DB11, and the registered face image is associated with the business information in the business information DB13 by the issued token ID. Thus, matching processing of the captured face image and the registered face image is enabled at each subsequent touch point. That is, the token ID associated with the registered face image is identification information that can be commonly used in all touch points. By using such a common token ID, the examination of the user U can be made efficient.

### [Baggage deposit procedure]

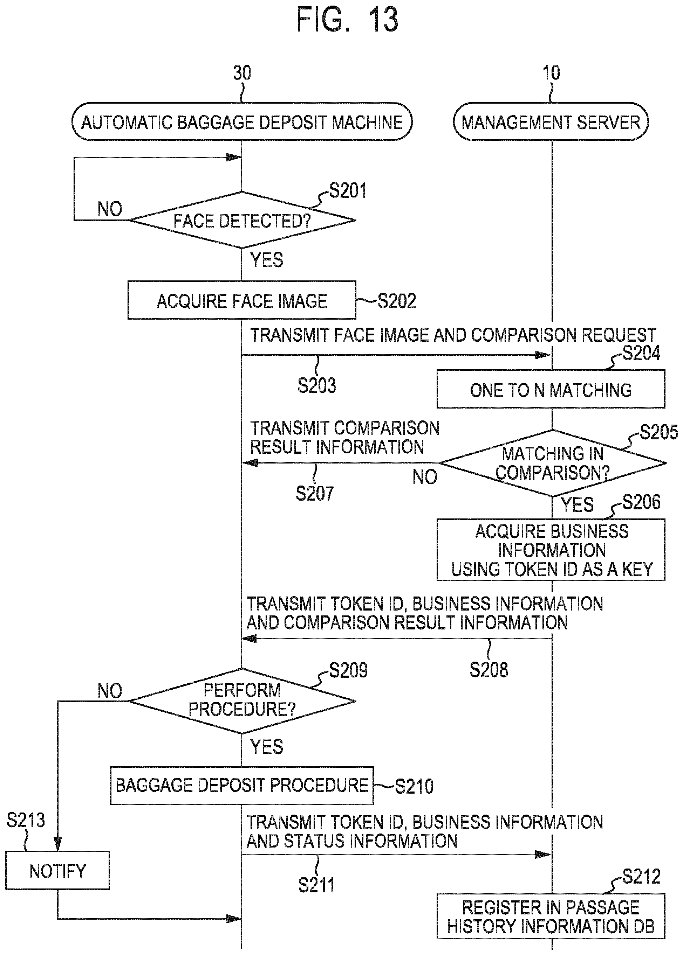

FIG. 13 is a sequence diagram illustrating an example of processing of the automatic baggage deposit machine 30 and the management server 10. This processing is executed when the user U who has completed the check-in procedure performs the baggage deposit procedure as necessary.

The automatic baggage deposit machine 30 constantly or periodically captures an image in front of the device, and determines whether or not a face of a user U standing in front of the automatic baggage deposit machine 30 is detected in the captured image (step S201). The automatic baggage deposit machine 30 waits until the face of the user U is detected in the image by the biometrics information acquisition device 309 (NO in step S201).

When the automatic baggage deposit machine 30 determines that the face of the user U is detected by the biometrics information acquisition device 309 (YES in step S201), the automatic baggage deposit machine 30 captures the face of the user U to acquire a face image of the user U as a target face image (step S202).

Next, the automatic baggage deposit machine 30 transmits the target face image of the user U captured by the biometrics information acquisition device 309, together with a comparison request, to the management server 10 via the network NW (step S203). Thus, the automatic baggage deposit machine 30 requests the management server 10 to compare the target face image of the user U captured by the biometrics information acquisition device 309 with the plurality of registered face images registered in the token ID information DB11 of the management server 10 with one to N matching.

Upon receiving the target face image and the comparison request from the automatic baggage deposit machine 30, the management server 10 performs matching processing of the face image of the user U (step S204). That is, the management server 10 compares the target face image received from the target face image received from the automatic baggage deposit machine 30 with the plurality of registered face images registered in the token ID information DB11 with one to N matching. Note that the registered face image to be matched is limited to the image associated with the token ID whose invalid flag value is "1" (valid).

Here, as a result of the comparison, if the management server 10 determines that there is no matching in the comparison (NO in step S205), the management server 10 transmits the comparison result information indicating no matching to the automatic baggage deposit machine 30 (step S207), and the process proceeds to step S209. On the other hand, as a result of the comparison, if the management server 10 determines that there is a matching in the comparison (YES in step S205), the process proceeds to step S206.

In step S206, the management server 10 acquires business information from the business information DB13 using the token ID as a key associated with the registered face image that is matched with the target face image in the token ID information DB11. Then, the management server 10 transmits comparison result information, the token ID, and the business information to the automatic baggage deposit machine 30 (step S208).

Next, when it is determined that the procedure can be performed based on the business information (YES in step S209), the automatic baggage deposit machine 30 performs a processing of the baggage check-in procedure of the user U based on the business information (step S210).

Next, the automatic baggage deposit machine 30 transmits the token ID, the business information, and the status information to the management server 10 via the network NW (step S211). The status information indicates that the baggage deposit procedure of the user U has been completed by matching processing of the face image. It is assumed that the status information includes information such as a time of passing the touch point and a device name of the used terminal.

Upon receiving the information from the automatic baggage deposit machine 30, the management server 10 registers the passage history information indicating the relationship between the token ID and the passage information of the touch point P2 in the passage history information DB12 (step S212). Further, the management server 10 updates the business information DB13 based on the business information received from the automatic baggage deposit machine 30 as necessary.

On the other hand, when the automatic baggage deposit machine 30 determines that the procedure cannot be performed based on the business information (NO in step S209), the automatic baggage deposit machine 30 notifies the user U of an error message (step S213).

### [Security inspection procedure]

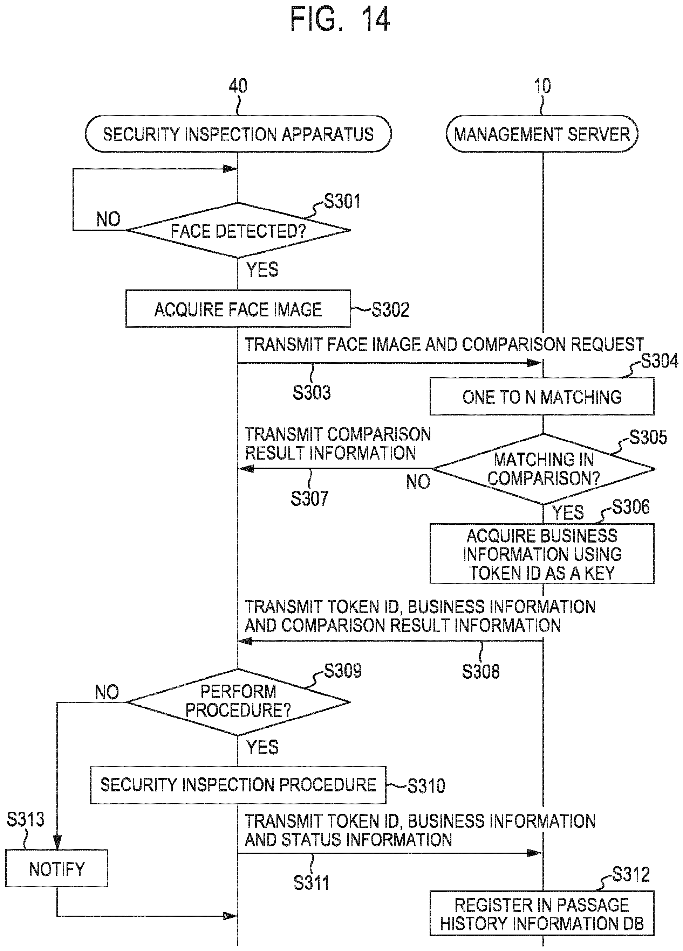

FIG. 14 is a sequence diagram illustrating an example of processing of the security inspection apparatus 40 and the management server 10. This processing is executed when the user U who has completed the check-in procedure performs the security inspection procedure.

The security inspection apparatus 40 constantly or periodically captures an image in front of the metal detector gate 410, and determines whether or not a face of a user U standing in front of the metal detector gate 410 is detected in the captured image (step S301). The security inspection apparatus 40 waits until the face of the user U is detected in the image by the biometrics information acquisition device 409 (NO in step S301).

When the security inspection apparatus 40 determines that the face of the user U is detected by the biometrics information acquisition device 409 (YES in step S301), the security inspection apparatus 40 captures the face of the user U to acquire a face image of the user U as a target face image (step S302).

Next, the security inspection apparatus 40 transmits the target face image of the user U captured by the biometrics information acquisition device 409, together with a comparison request, to the management server 10 via the network NW (step S303). Thus, the security inspection apparatus 40 requests the management server 10 to compare the target face image of the user U captured by the biometrics information acquisition device 409 with the plurality of registered face images registered in the token ID information DB11 of the management server 10 with one to N matching.

Upon receiving the target face image and the comparison request from the security inspection apparatus 40, the management server 10 performs matching processing of the face image of the user U (step S304). That is, the management server 10 compares the target face image received from the target face image received from the security inspection apparatus 40 with the plurality of registered face images registered in the token ID information DB11 with one to N matching. Note that the registered face image to be matched is limited to the image associated with the token ID whose invalid flag value is "1" (valid).

Here, as a result of the comparison, if the management server 10 determines that there is no matching in the comparison (NO in step S305), the management server 10 transmits the comparison result information indicating no matching to the security inspection apparatus 40 (step S307), and the process proceeds to step S309. On the other hand, as a result of the comparison, if the management server 10 determines that there is a matching in the comparison (YES in step S305), the process proceeds to step S306.

In step S306, the management server 10 acquires business information from the business information DB13 using the token ID as a key associated with the registered face image that is matched with the target face image in the token ID information DB11. Then, the management server 10 transmits comparison result information, the token ID, and the business information to the security inspection apparatus 40 (step S308).

Next, when it is determined that the procedure can be performed based on the business information (YES in step S309), the security inspection apparatus 40 performs the security inspection processing of the user U based on the business information (step S310). In the security inspection process, the CPU 401 controls each part of the security inspection apparatus 40. Thus, the security inspection apparatus 40 detects metals carried by the user U passing through the metal detector gate 410. The user U passing through the metal detector gate 410 goes toward the departure examination site.

Next, the security inspection apparatus 40 transmits the token ID, the business information, and status information to the management server 10 via the network NW (step S311). The status information indicates that the security inspection procedure of the user U has been completed by matching processing of the face image. It is assumed that the status information includes information such as a time of passing the touch point and a device name of the used terminal.

Upon receiving the information from the security inspection apparatus 40, the management server 10 registers the passage history information indicating the relationship between the token ID and the passage information of the touch point P3 in the passage history information DB12 (step S312) . The management server 10 updates the business information DB13 based on the business information received from the security inspection apparatus 40 as necessary.

On the other hand, when the security inspection apparatus 40 determines that the procedure cannot be performed based on the business information (NO in step S309), the security inspection apparatus 40 notifies the user U of an error message (step S313).

### [Departure examination procedure]

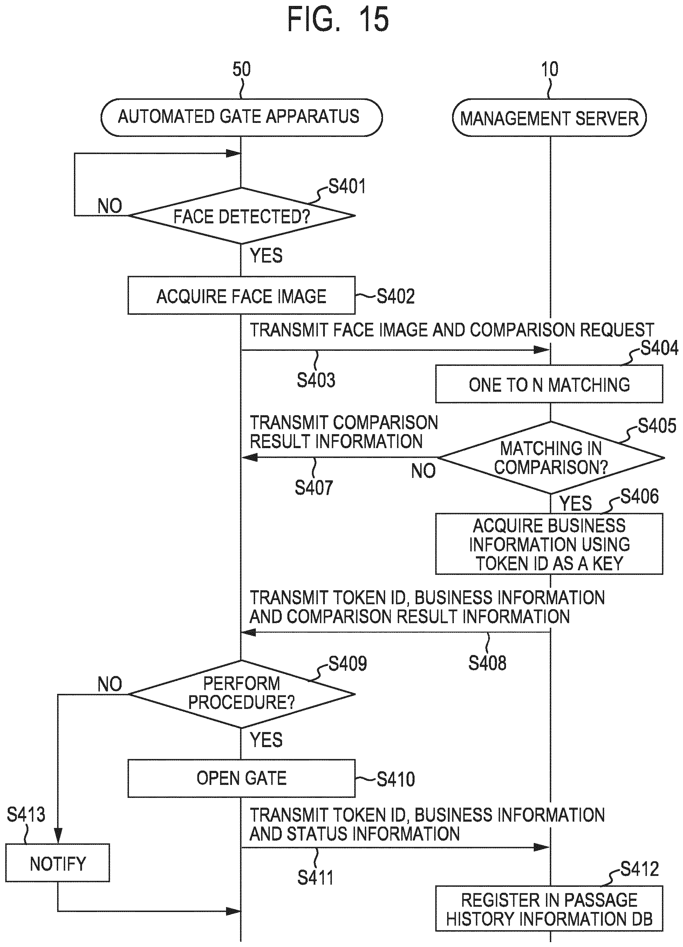

FIG. 15 is a sequence diagram illustrating an example of processing of the automated gate apparatus 50 and the management server 10.

The user U, who has completed security inspection procedure, goes to the departure examination site and performs the departure examination procedure at the automated gate apparatus 50. The automated gate apparatus 50 and the management server 10 execute the processing illustrated in FIG. 15 each time a plurality of users U perform the departure examination procedure, respectively.

The automated gate apparatus 50 constantly or periodically captures an image in front of the automated gate apparatus 50, and determines whether or not a face of a user U standing in front of the automated gate apparatus 50 is detected in the captured image (step S401). The automated gate apparatus 50 waits until the face of the user U is detected in the image by the biometrics information acquisition device 509 (NO in step S401).

When the automated gate apparatus 50 determines that the face of the user U is detected by the biometrics information acquisition device 509 (YES in step S401), the automated gate apparatus 50 captures the face of the user U to acquire a face image of the user U as a target face image (step S402).

Next, the automated gate apparatus 50 transmits the target face image of the user U captured by the biometrics information acquisition device 509, together with a comparison request, to the management server 10 via the network NW (step S403). Thus, the automated gate apparatus 50 requests the management server 10 to compare the target face image of the user U captured by the biometrics information acquisition device 509 with the plurality of registered face images registered in the token ID information DB11 of the management server 10 with one to N matching.

Upon receiving the target face image and the comparison request from the automated gate apparatus 50, the management server 10 performs matching processing of the face image of the user U (step S404). That is, the management server 10 compares the target face image received from the target face image received from the automated gate apparatus 50 with the plurality of registered face images registered in the token ID information DB11 with one to N matching. Note that the registered face image to be matched is limited to the image associated with the token ID whose invalid flag value is "1" (valid).

Here, as a result of the comparison, if the management server 10 determines that there is no matching in the comparison (NO in step S405), the management server 10 transmits the comparison result information indicating no matching to the automated gate apparatus 50 (step S407), and the process proceeds to step S409. On the other hand, as a result of the comparison, if the management server 10 determines that there is a matching in the comparison (YES in step S405), the process proceeds to step S406.

In step S406, the management server 10 acquires business information from the business information DB13 using the token ID as a key associated with the registered face image that is matched with the target face image in the token ID information DB11. Then, the management server 10 transmits comparison result information, the token ID, and the business information to the automated gate apparatus 50 (step S408).

Next, when it is determined that the procedure can be performed based on the business information (YES in step S409), the automated gate apparatus 50 performs the departure examination procedure of the user U based on the business information and opens the gate 511 (step S410). The user U passing through the touch point P4 goes to the departure area where the boarding gate is located.

Next, the automated gate apparatus 50 transmits the token ID, the business information, and status information to the management server 10 via the network NW (step S411). The status information indicates that the departure examination procedure of the user U has been completed by matching processing of the face image. It is assumed that the status information includes information such as a time of passing the touch point and a device name of the used terminal.

Upon receiving the information from the automated gate apparatus 50, the management server 10 registers the passage history information indicating the relationship between the token ID and the passage information of the touch point P4 in the passage history information DB12 (step S412). The management server 10 updates the business information DB13 based on the business information received from the automated gate apparatus 50 as necessary.

On the other hand, when the automated gate apparatus 50 determines that the procedure cannot be performed based on the business information (NO in step S409), the automated gate apparatus 50 notifies the user U of an error message (step S413). For example, a notification screen including a message such as "Please undergo the departure examination procedure at a manned counter." is displayed on the display device 507.

### [Boarding procedure to an aircraft]

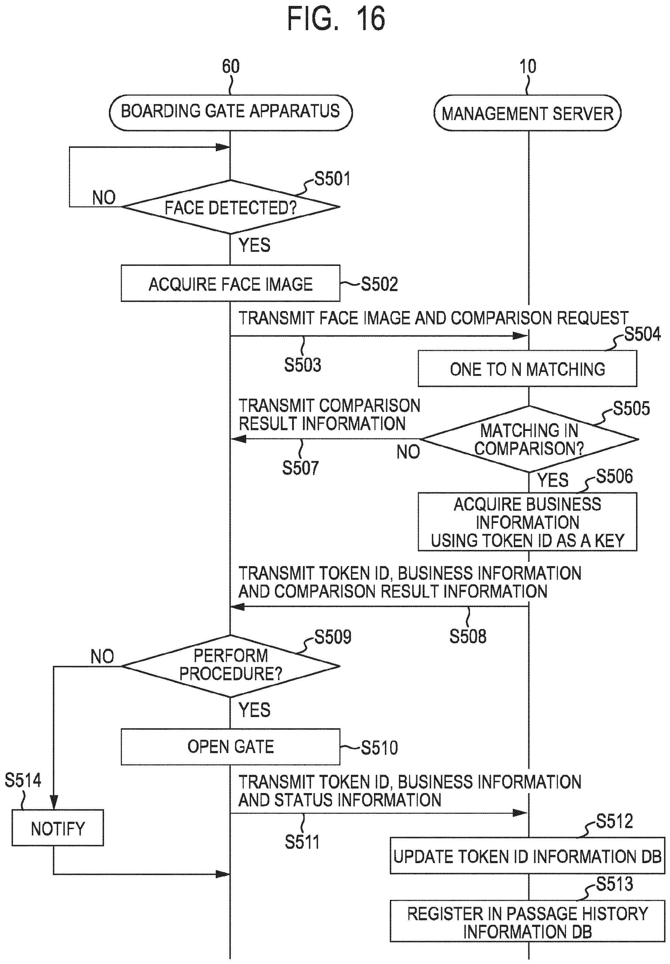

FIG. 16 is a sequence diagram illustrating an example of processing of the boarding gate apparatus 60 and the management server 10.

The boarding gate apparatus 60 constantly or periodically captures an image in front of the device, and determines whether or not a face of a user U standing in front of the boarding gate apparatus 60 is detected in the captured image (step S501). The boarding gate apparatus 60 waits until the face of the user U is detected in the image by the biometrics information acquisition device 609 (NO in step S501).

When the boarding gate apparatus 60 determines that the face of the user U is detected by the biometrics information acquisition device 609 (YES in step S501), the boarding gate apparatus 60 captures the face of the user U to acquire a face image of the user U as a target face image (step S502).

Next, the boarding gate apparatus 60 transmits the target face image of the user U captured by the biometrics information acquisition device 609, together with a comparison request, to the management server 10 via the network NW (step S503). Thus, the boarding gate apparatus 60 requests the management server 10 to compare the target face image of the user U captured by the biometrics information acquisition device 609 with the plurality of registered face images registered in the token ID information DB11 of the management server 10 with one to N matching.

Upon receiving the target face image and the comparison request from the boarding gate apparatus 60, the management server 10 performs matching processing of the face image of the user U (step S504). That is, the management server 10 compares the target face image received from the target face image received from the boarding gate apparatus 60 with the plurality of registered face images registered in the token ID information DB11 with one to N matching. Note that the registered face image to be matched is limited to the image associated with the token ID whose invalid flag value is "1" (valid).

Here, as a result of the comparison, if the management server 10 determines that there is no matching in the comparison (NO in step S505), the management server 10 transmits the comparison result information indicating no matching to the boarding gate apparatus 60 (step S507), and the process proceeds to step S509. On the other hand, as a result of the comparison, if the management server 10 determines that there is a matching in the comparison (YES in step S505), the process proceeds to step S506.

In step S506, the management server 10 acquires business information from the business information DB13 using the token ID as a key associated with the registered face image that is matched with the target face image in the token ID information DB11. Then, the management server 10 transmits comparison result information, the token ID, and the business information to the boarding gate apparatus 60 (step S508).

Next, when it is determined that the procedure can be performed based on the business information (YES in step S509), the boarding gate apparatus 60 performs the boarding procedure of the user U to board the aircraft based on the business information and opens the gate 611 (step S510). The user U passing through the touch point P5 boards to the aircraft.

Next, the boarding gate apparatus 60 transmits the token ID, the business information, and status information to the management server 10 via the network NW (step S511). The status information indicates that the boarding procedure for the user U to board the aircraft has been completed by matching processing of the face image. It is assumed that the status information includes information such as a time of passing the touch point and a device name of the used terminal.

Upon receiving the information from the boarding gate apparatus 60, the management server 10 updates the token ID information DB11 (step S512). Specifically, the management server 10 updates the invalid flag of the token ID information DB11 to an invalid value ("0"). Thus, the validity period (life cycle) of the token ID expires.

Then, the management server 10 registers the passage history information indicating the relationship between the token ID and the passage information of the touch point P5 in the passage history information DB12 (step S513).

On the other hand, when the boarding gate apparatus 60 determines that the procedure cannot be performed based on the business information (NO in step S509), the boarding gate apparatus 60 notifies the user U of an error message (step S514). For example, the boarding gate apparatus 60 displays a notification screen containing a message such as "Please undergo the procedure at a manned counter." on the display device 607.

In this manner, according to the present example embodiment, the management server 10 associates the control data for face authentication with the business information used for various businesses by the token ID. The management server 10 controls to expire the validity period of the token ID in accordance with the end of a series of business. That is, since the validity or invalidity of the association by the token ID can be easily switched, different kinds of databases can be associated at a high security level.

In the case of the airport facility, a series of procedural business at the touch points P1 to P5 are performed in a predetermined order. The management server 10 can expire the validity period of the token ID in accordance with the end of a series of business. Specifically, the token ID is invalidated based on the completion of the last business in the sequence (boarding procedure at the boarding gate), that is, when the user U has passed through the boarding gate.
Thus, the management server 10 can limit the association state of the data by the token ID to a necessary period.

### [Second example embodiment]

Hereinafter, the information processing system 2 according to the present example embodiment will be described. Reference numerals that are common to the reference numerals denote in the drawings of the first example embodiment indicate the same objects. Description of portions common to the first example embodiment will be omitted, and portions different from the first example embodiment will be described in detail.

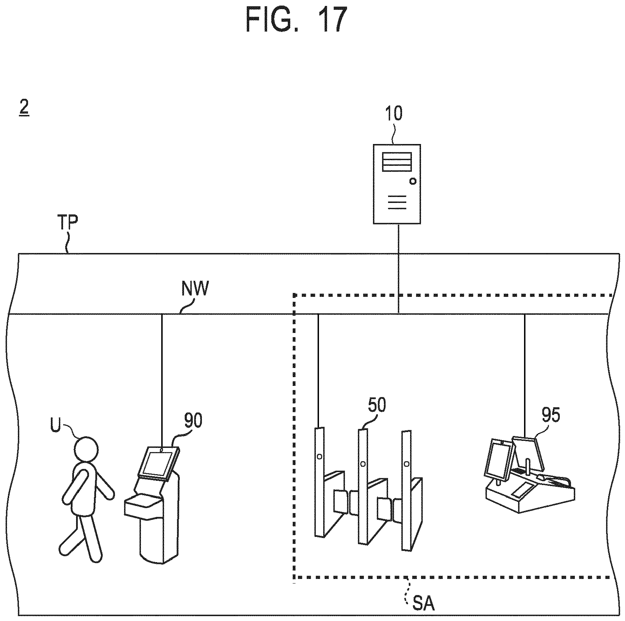

FIG. 17 is a block diagram illustrating an example of the overall configuration of the information processing system 2 according to the present example embodiment. The information processing system 2 is a computer system for supporting various business related to the operation of the theme park TP. In FIG. 17, according to the information processing system 2, an automatic ticket vending machine 90 for selling an entrance ticket, an automated gate apparatus 50 installed at an entrance/exit of the security area SA of the theme park TP, and a POS terminal 95 installed in the security area SA are connected to the management server 10 via a network NW. The automatic ticket vending machine 90 in the present example embodiment is provided at the entrance of the theme park TP, but the location is not limited thereto. For example, the automatic ticket vending machine 90 may be installed in a store such as a convenience store away from the theme park TP.

The management server 10 according to the present example embodiment has the token ID information DB11, the passage history information DB12 and the business information DB13 similarly to the first example embodiment. However, since the business in the present example embodiment is different from the business in the first example embodiment, the data items of the business information stored in the business information DB13 are different from the data items of the business information in the first example embodiment. Specifically, the business in the present example embodiment includes business involving commercial transactions within the theme park TP. Therefore, the business information includes settlement information such as a credit card number. Note that, the management server 10 and the automated gate apparatus 50 can control the entry and exit of the user U based on the face authentication even for the user U whose settlement information is not registered.

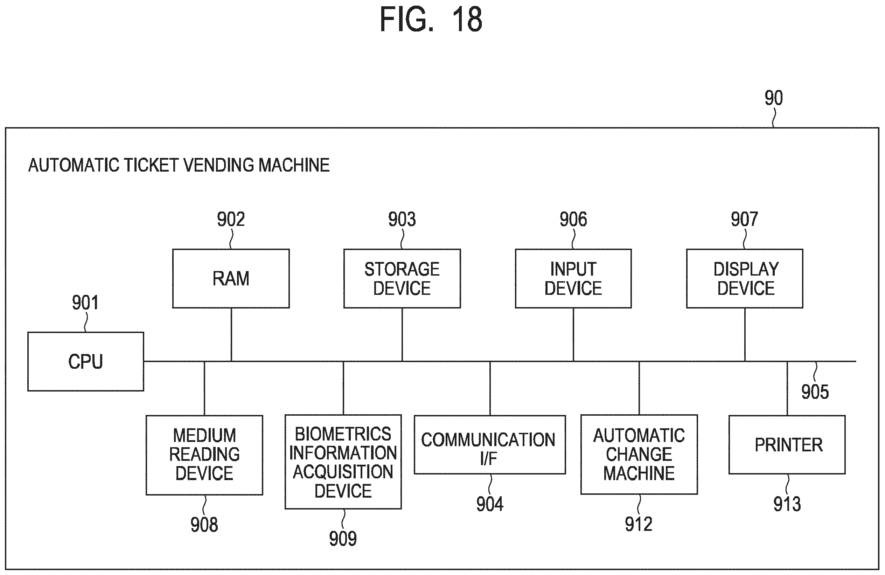

FIG. 18 is a block diagram illustrating an example of a hardware configuration of the automatic ticket vending machine 90. As illustrated in FIG. 18, the automatic ticket vending machine 90 includes a CPU 901, a RAM 902, a storage device 903, a communication I/F 904, an input device 906, a display device 907, a medium reading device 908, a biometrics information acquisition device 909, an automatic change machine 912, and a printer 913. Each device is connected to a bus line 905.

The automatic change machine 912 is a device for automatically discharging the money corresponding to the change amount calculated by the CPU 901 to the withdrawal port when the total amount of the money put into the deposit port exceeds the payment amount for purchasing goods or using services. The printer 913 prints a ticket, a receipt, a credit card statements or the like on a paper under the control of the CPU 901.

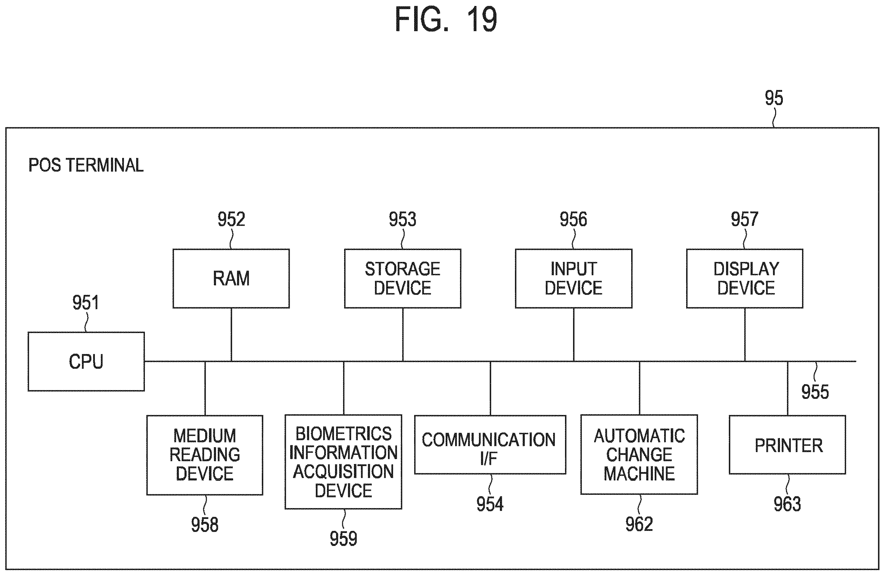

FIG. 19 is a block diagram illustrating an example of a hardware configuration of the POS terminal 95. The POS terminal 95 includes a CPU 951, a RAM 952, a storage device 953, a communication I/F 954, an input device 956, a display device 957, a medium reading device 958, a biometrics information acquisition device 959, an automatic change machine 962, and a printer 963. Each device is connected to a bus line 955.

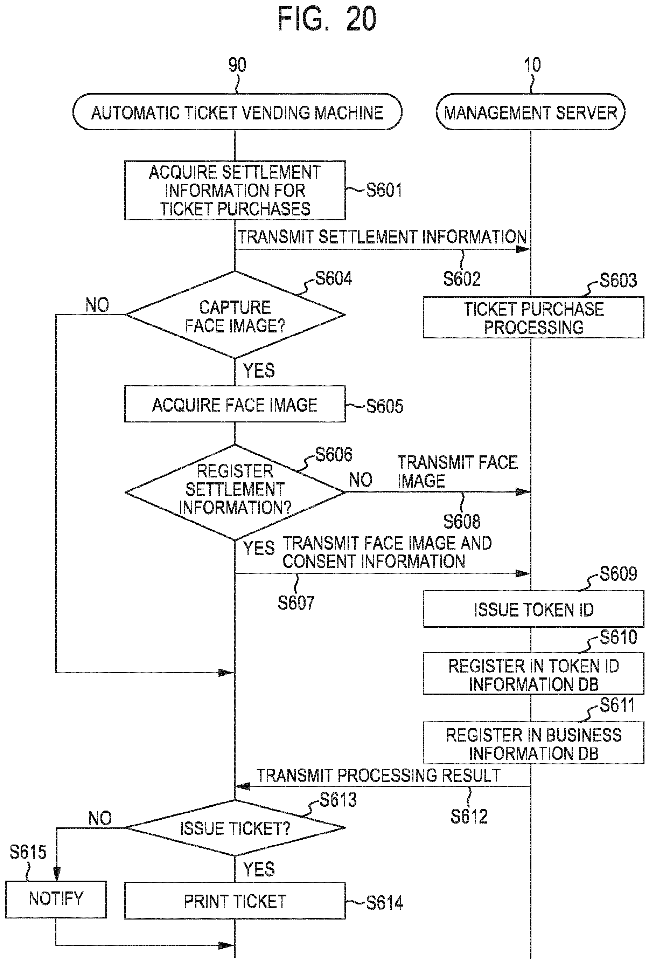

Next, the operation of each apparatus in the information processing system 2 according to the present example embodiment will be described with reference to FIGS. 20 to 22. Since the control at the time of entry by the automated gate apparatus 50 is substantially the same as that of the first example embodiment, the description thereof will be omitted.

### [Registration processing at the time of ticketing]

FIG. 20 is a sequence diagram illustrating an example of processing of the automatic ticket vending machine 90 and the management server 10. This processing is executed when the user U purchases a ticket for the theme park TP at the automatic ticket vending machine 90.

First, the automatic ticket vending machine 90 acquires settlement information for ticket purchase (step S601) and transmits the settlement information to the management server 10 (step S602).

Based on the received settlement information, the management server 10 executes ticket purchase processing (settlement processing) with a server of a settlement system (not illustrated) (step S603).

On the other hand, the automatic ticket vending machine 90 determines whether the user U consents to capturing a face image. When the automatic ticket vending machine determines that the user U consents (YES in step S604), the automatic ticket vending machine 90 acquires a face image of the user U captured by the biometrics information acquisition device 909 as a registered face image (step S605), and the process proceeds to step S606. On the other hand, when the automatic ticket vending machine 90 determines that the user U does not consent (NO in step S604), the process proceeds to step S613.

In step S606, it is determined whether the user U consents to the registration of settlement information. When the automatic ticket vending machine 90 determines that the user U consents (YES in step S606), the automatic ticket vending machine 90 transmits the face image of the user U (registered face image) and consent information to the management server 10 (step S607), and the process proceeds to step S609. On the other hand, when the automatic ticket vending machine 90 determines that the user U does not consent (NO in step S606), the automatic ticket vending machine 90 transmits only the face image to the management server 10 (step S608), and the process proceeds to step S609.

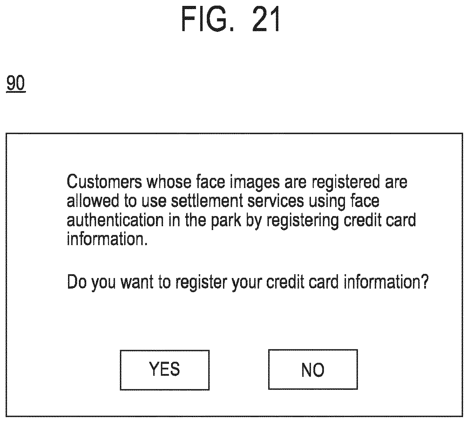

FIG. 21 is a diagram illustrating an example of a screen displayed on the automatic ticket vending machine 90. Here, a description of the capturing of the face image ("Customers whose face images are registered are allowed to use settlement services using face authentication in the park by registering credit card information. Do you want to register your credit card information?") and a button for selecting whether to register the settlement information are displayed.

In step S609, upon receiving information from the automatic ticket vending machine 90, the management server 10 issues a token ID. Next, the management server 10 registers the relationship between the token ID and the registered face image in the token ID information DB11 (step S610) .

Next, the management server 10 registers the relationship between the token ID and the business information (including the settlement information) in the business information DB13 (step S611). Thus, the registered face image is associated with the business information such as the settlement information by the token ID. When there is no consent on the association of the settlement information, the association with the settlement information is omitted. The validity period of the token ID according to the present example embodiment is determined by the type (One-day pass, annual passport, etc.) of the purchased ticket. For example, in the case where the type of the ticket is the one-day pass, the invalid flag of the token ID may be controlled to an invalid value ("0") at the end time of the business hour of the date on which entry to the theme park TP is possible or at the time of exit from the theme park TP. That is, the management server 10 expires the validity period of the token ID based on the exit information of the user U from the area where the business is performed.

Next, the management server 10 transmits processing result information including the issued token ID to the automatic ticket vending machine 90 (step S612).

In step S613, the automatic ticket vending machine 90 determines whether the ticket can be issued. When it is determined that the ticket can be issued (YES in step S613), the automatic ticket vending machine 90 prints the ticket (step S614).

On the other hand, when it is determined that the ticket cannot be issued (NO in step S613), the automatic ticket vending machine 90 notifies that the ticket purchase processing has failed (step S615).

### [Settlement processing by face authentication]

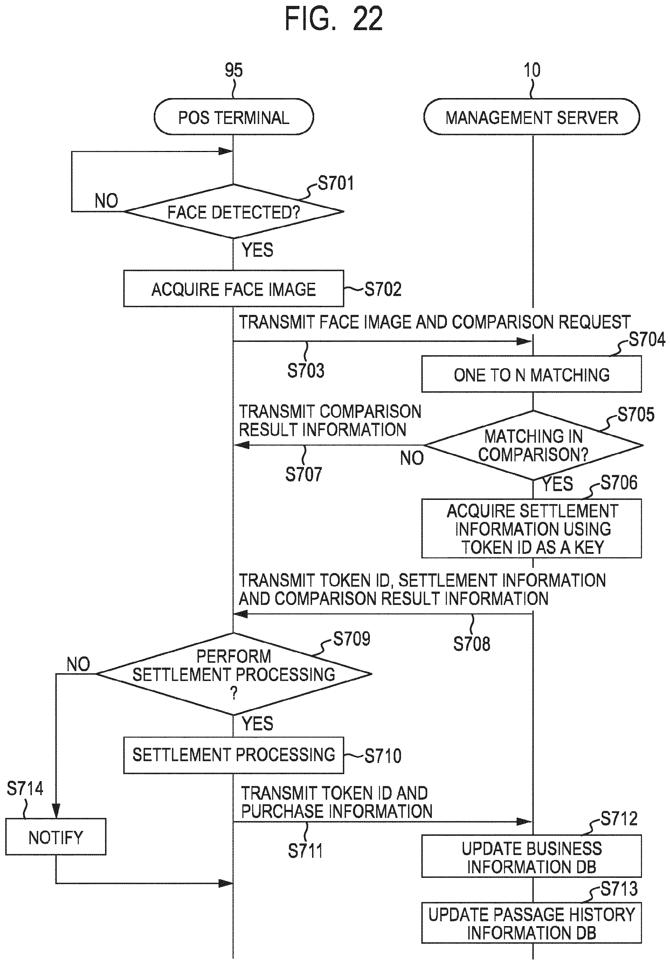

FIG. 22 is a sequence diagram illustrating an example of processing of the POS terminal 95 and the management server 10. This processing is executed when the user U designates a settlement method using a face authentication at the time of purchase of the commodity in the theme park TP.

First, the POS terminal 95 determines whether or not a face of the user U standing in front of the POS terminal 95 is detected in the image captured in front of the apparatus (step S701). The POS terminal 95 waits until the face of the user U is detected in the image by the biometrics information acquisition device 959 (NO in step S701).

When the POS terminal 95 determines that the face of the user U is detected by the biometrics information acquisition device 959 (YES in step S701), the POS terminal captures the face of the user U to acquire a face image of the user U as a target face image (step S702).

Next, the POS terminal 95 transmits the target face image of the user U captured by the biometrics information acquisition device 959, together with a comparison request, to the management server 10 via the network NW (step S703). Thus, the POS terminal 95 requests the management server 10 to compare the target face image of the user U captured by the biometrics information acquisition device 959 with the plurality of registered face images registered in the token ID information DB11 of the management server 10 with one to N matching.

Upon receiving the target face image and the comparison request from the POS terminal 95, the management server 10 performs matching processing of the face image of the user U (step S704). That is, the management server 10 compares the target face image received from the target face image received from the POS terminal 95 with the plurality of registered face images registered in the token ID information DB11 with one to N matching. Note that the registered face image of matching destination is limited to the image associated with the token ID whose invalid flag value is "1" (valid).

Here, as a result of the comparison, if the management server 10 determines that there is no matching in the comparison (NO in step S705), the management server 10 transmits the comparison result information indicating no matching to the POS terminal 95 (step S707), and the process proceeds to step S709. On the other hand, as a result of the comparison, if the management server 10 determines that there is a matching in the comparison (YES in step S705), the process proceeds to step S706.

In step S706, the management server 10 acquires settlement information included in the business information from the business information DB13 using the token ID as a key associated with the registered face image that is matched with the target face image. Then, the management server 10 transmits comparison result information, the token ID, and the settlement information to the POS terminal 95 (step S708).

Next, when the POS terminal determines that the settlement processing can be executed based on the settlement information acquired from the management server 10 (YES in step S709), the POS terminal 95 executes the settlement processing of the user U based on the settlement information (step S710).

Next, the POS terminal 95 transmits the token ID and the purchase information of the commodity or the like to the management server 10 via the network NW (step S711).

Upon receiving the information from the POS terminal 95, the management server 10 updates the business information DB13 and the passage history information DB12 (step S712, step S713) .

On the other hand, when the POS terminal 95 determines that the settlement processing cannot be executed based on the settlement information (NO in step S709), the POS terminal 95 notifies the user U of an error message (step S714) .

In this way, according to the present example embodiment, by associating the face image with the settlement information by the token ID at the time of purchase of the ticket, the settlement processing by the face authentication is enabled during the period in which the token ID is valid.

### [Third example embodiment]

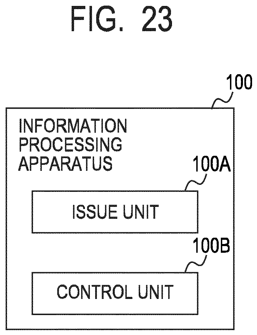

FIG. 23 is a block diagram illustrating an example of the overall configuration of an information processing apparatus 100 according to the present example embodiment. The information processing apparatus 100 includes an issue unit 100A that issues an identifier for associating the registered biometrics information of the user with business information related to a predetermined business and a control unit 100B that controls a validity period of the identifier. According to the information processing apparatus 100 in the present example embodiment, it is possible to associate data with a high security level.

### [Modified Example Embodiments]

While the present invention has been described above with reference to the example embodiments, the present invention is not limited to the example embodiments described above. Various modifications that may be understood by those skilled in the art can be made to the configuration and details of the present invention within the scope not departing from the spirit of the present invention. For example, it should be understood that an example embodiment in which a part of the configuration of any of the example embodiments is added to another example embodiment or an example embodiment in which a part of the configuration of any of the example embodiments is replaced with a part of the configuration of another example embodiment is also one of the example embodiments to which the present invention may be applied.

In the first and second example embodiment, the case where the present invention is applied to business at airport facilities and theme parks has been described. However, according to the present invention, the control data necessary for face authentication and the business information necessary for performing the business are managed in separate databases, and the registered face image and the business information are related by the token ID. The configuration of the present invention, in which the token ID can be easily associated with business information of an existing business system, can be applied to business in any industry such as railway industry, accommodation industry, service industry, and manufacturing industry. For example, when it is applied to the business of the accommodation industry, by associating the face image of the guest with the business information at the time of check-in to the hotel by the token ID, the purchase of commodity in the facility, the use of the service, the control of entering and exiting the guest room, etc. can be performed by the face authentication during the stay period of the user.

When it is applied to the railway business, a passenger ticket or a limited express ticket is purchased and a face image is captured by a ticket vending machine of a portable terminal or a service counter, the management server 10 can issue a token ID at the time of registering the face image in the management server 10. Thus, the user U can enter the station premises by face authentication at the automatic ticket gate to get on a prescribed train. Further, in the case where the ticket inspection is performed by the conductor in the train, the conductor may capture the face image of the user U using the portable business terminal and upload the image to the management server 10 via the network NW. Thus, the ticket inspection business based on the face authentication can be performed in the train. The ticket checking may be automatically performed by the management server 10 based on a captured image by a network camera installed in the vehicle. Then, when the user U disembarks at the destination station, the user U can exit by completing face authentication at the automatic ticket gate installed at the disembarkation station in the same manner as when entering. When the token ID is associated with the settlement information in advance, the railway fare can be paid by the face authentication. As described above, the present invention has the advantage of making it easy to implement the function of face recognition in existing business systems.

Further, in the first, second, and modified example embodiment described above, the case where the management server 10 performs control so that the life cycle of the token ID and the life cycle of the business information are synchronized has been described, but may be performed asynchronously. Here, an explanation will be given by way of an example relating to the business of an airline company. First, when a user U performs a procedure for becoming a member (Hereinafter referred to as "mileage member".) of the airline company, the management server 10 issues a token ID with reception of a face image from a user terminal such as a smartphone as a trigger, and registers a relationship between the face image of the user U and the token ID in the token ID information DB11. The management server 10 registers the relationship between the issued token ID and the business information in the business information DB13 at a timing when the user U reserves a boarding ticket, for example, or purchases the boarding ticket. During the period when the user U is a mileage member, the management server 10 maintains the value of the invalid flag of the token ID as valid ("1"). Thus, the validity period of the token ID is not affected by the progress (start and end) of the work. That is, unlike the case of the first example embodiment, the token ID is not invalidated even if the user U passes through the boarding gate. Therefore, the user U can perform various procedures at the airport A (check-in procedure, boarding procedure, etc.) by the face authentication while the member registration is maintained. As a result, the convenience of the user U can be improved.

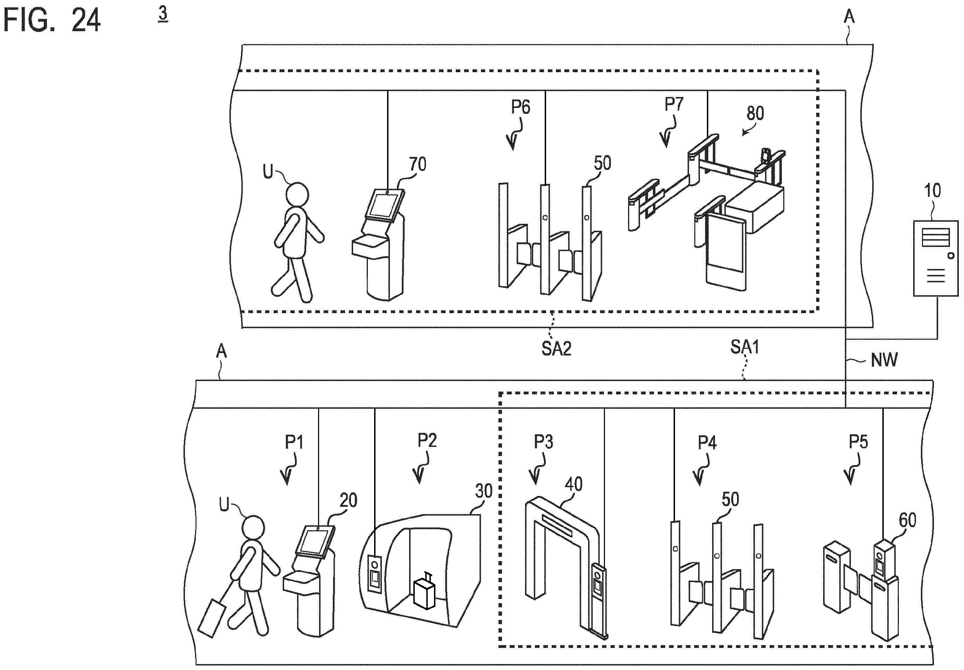

In the case of the first example embodiment described above, the life cycle from issuance of the token ID to invalidation at the time of departure of the user U has been explained, but the configuration of the present invention can also be applied to business such as immigration examination procedure and customs procedures at the time of entry to country. FIG. 24 is a block diagram illustrating an example of the overall configuration of the information processing system 3 according to the modified example embodiment. Here, the ID issuing terminal 70 of the token ID, the automated gate apparatus 50, and the automatic customs gate device 80 are located in a security area SA2 at the time of entry to country illustrated by a broken line.

For example, when the ID issuing terminal 70 applies for the issuance of the token ID by reading the passport face image and capturing the face image of the user U in the same manner as the check-in terminal 20, the subsequent procedures (immigration examination procedure and customs procedures) in the automated gate apparatus 50 and the automatic customs gate device 80 can be executed by the face authentication. The application for issuance of the token ID at the time of entry to country is not limited to use the ID issuing terminal 70, but may be made from the automated gate apparatus 50 and the automatic customs gate device 80. That is, the management server 10 may acquire the passport face image and the target biometrics image from any one of the service terminals for performing business related to the entry of the user U. When a token ID is issued at the time of entry to country, there is an advantage that the first procedure (check-in procedure, etc.) at the time of return to the country (leave from country) can also be performed by the face authentication.

The configuration of the present invention is applicable not only to international flights but also to domestic flights. In the case of the domestic flights, in addition to the departure examination procedure, with one to one matching processing of the passport face image and the captured face image may be omitted. In this case, for example, a captured face image at the time of purchase of the boarding ticket may be registered as the registered biometrics image. When purchasing or checking in the boarding ticket online using a terminal such as a smartphone or a personal computer, the user can board an aircraft using the face authentication at the airport A by registering a face image captured by the terminal.

In the first example embodiment described above, the check-in terminal 20 reads the passport face image from the passport to apply for issuance of the token ID to the management server 10. However, in consideration of the case where the check-in procedure is performed online, it is preferable that the issuance application can be made in the automatic baggage deposit machine 30 or the security inspection apparatus 40. That is, the management server 10 acquires the passport face image and the target biometrics image from any one of the business terminals for performing the business related to the departure of the user U. In addition, an application for issuance of a token ID may be made in the first of a series of procedural business performed at the time of departure.

In addition, when the airport facilities of the origin (the first country) and the destination (the second country) share the management server 10, the token ID is issued through the check-in procedure in the first country, and the business information associated with the token ID can be easily used by the face authentication in the immigration examination and customs examination in the second country.

Further, the scope of the example embodiments also includes a processing method that stores, in a storage medium, a program that causes the configuration of each of the example embodiments to operate so as to implement the function of each of the example embodiments described above, reads the program stored in the storage medium as a code, and executes the program in a computer. That is, the scope of each of the example embodiments also includes a computer readable storage medium. Further, each of the example embodiments includes not only the storage medium in which the program described above is stored but also the program itself.

As the storage medium, for example, a floppy (registered trademark) disk, a hard disk, an optical disk, a magneto-optical disk, a CD-ROM, a magnetic tape, a nonvolatile memory card, or the like can be used. Further, the scope of each of the example embodiments includes an example that operates on OS to perform a process in cooperation with another software or a function of an add-in board without being limited to an example that performs a process by an individual program stored in the storage medium.

The whole or part of the example embodiments disclosed above can be described as, but not limited to, the following supplementary notes.

### (Supplementary Note 1)

An information processing apparatus comprising:
an issue unit that issues an identifier for associating the registered biometrics information of the user with business information related to a predetermined business; and
a control unit that controls a validity period of the identifier.

### (Supplementary Note 2)

The information processing apparatus according to supplementary note 1,
wherein the control unit causes the validity period to expire in accordance with the end of the business.

### (Supplementary Note 3)

The information processing apparatus according to supplementary note 1,
wherein the control unit causes the validity period to expire when the last one of the plurality of pieces of the business to be executed in a predetermined order is completed.

### (Supplementary Note 4)

The information processing apparatus according to supplementary note 1,
wherein the control unit causes the validity period to expire based on exit information of the user from the area where the business is performed.

### (Supplementary Note 5)

The information processing apparatus according to supplementary note 1,
wherein the control unit controls the validity period of the identifier asynchronously with progress of the business.

### (Supplementary Note 6)

The information processing apparatus according to any one of supplementary notes 1 to 5, further comprising:
a matching unit that matches biometrics information of a matching target and registered biometrics information input from a business terminal for performing the business; and
an output unit that outputs to the business terminal the business information associated via the identifier with respect to the registered biometrics information which matches the biometrics information as a result of matching.

### (Supplementary Note 7)

The information processing apparatus according to any one of supplementary notes 1 to 6,
wherein the business information includes settlement information of the user to be used in the business involving commercial transactions.

### (Supplementary Note 8)

The information processing apparatus according to any one of supplementary notes 1 to 7,
wherein the business information includes information concerning a passport and a boarding ticket to be used in the business at airport facilities.

### (Supplementary Note 9)

The information processing apparatus according to supplementary note 6,
wherein the matching unit matches passport biometrics information read from a passport at the business terminal in an airport facility and other biometrics information captured with possessor of the passport; and
wherein the issue unit associates the other biometrics information as the registered biometrics information with the business information, using the identifier which is issued when the passport biometrics information matches the other biometric information as a result of the matching.

### (Supplementary Note 10)

The information processing apparatus according to supplementary note 9,
wherein the matching unit acquires the passport biometrics information and the other biometrics information from any one of the business terminals that perform the business relating to a procedure of the user for departing from a country.

### (Supplementary Note 11)

The information processing apparatus according to supplementary note 9,
wherein the matching unit acquires the passport biometrics information and the other biometrics information from any one of the business terminals that perform the business relating to a procedure of the user for entering to a country.

### (Supplementary Note 12)

The information processing apparatus according to any one of supplementary notes 1 to 4,
wherein the control unit causes the validity period to expire based on the gate passage information of the user at the boarding gate of the airport facility

### (Supplementary Note 13)

The information processing apparatus according to any one of supplementary notes 1 to 12,
wherein the registered biometrics information is any of a face image, an iris image, and a fingerprint image.

### (Supplementary Note 14)

An information processing method comprising:
issuing an identifier for associating the registered biometrics information of the user with business information related to a predetermined business; and
controlling a validity period of the identifier.

### (Supplementary Note 15)

A storage medium storing a program that causes a computer to perform:
issuing an identifier for associating the registered biometrics information of the user with business information related to a predetermined business; and
controlling a validity period of the identifier.

### [Reference Signs List]

- NW: network
- 1,2,3: information processing system
- 10: management server
- 11: token ID information DB
- 12: passage history information DB
- 13: business information DB
- 20: check-in terminal
- 30: automatic baggage deposit machine
- 40: security inspection apparatus
- 50: automated gate apparatus
- 60: boarding gate apparatus
- 70: ID issuing terminal
- 80: automatic customs gate apparatus
- 90: automatic ticket vending machine
- 95: POS terminal
- 100: information processing apparatus
- 100A: issue unit
- 100B: control unit

## Claims

1. An information processing apparatus comprising:
an issue unit that issues an identifier for associating the registered biometrics information of the user with business information related to a predetermined business; and
a control unit that controls a validity period of the identifier.

2. The information processing apparatus according to claim 1,
wherein the control unit causes the validity period to expire in accordance with the end of the business.

3. The information processing apparatus according to claim 1,
wherein the control unit causes the validity period to expire when the last one of the plurality of pieces of the business to be executed in a predetermined order is completed.

4. The information processing apparatus according to claim 1,
wherein the control unit causes the validity period to expire based on exit information of the user from the area where the business is performed.

5. The information processing apparatus according to claim 1,
wherein the control unit controls the validity period of the identifier asynchronously with progress of the business.

6. The information processing apparatus according to any one of claims 1 to 5, further comprising:
a matching unit that matches biometrics information of a matching target and registered biometrics information input from a business terminal for performing the business; and
an output unit that outputs to the business terminal the business information associated via the identifier with respect to the registered biometrics information which matches the biometrics information as a result of matching.

7. The information processing apparatus according to any one of claims 1 to 6,
wherein the business information includes settlement information of the user to be used in the business involving commercial transactions.

8. The information processing apparatus according to any one of claims 1 to 7,
wherein the business information includes information concerning a passport and a boarding ticket to be used in the business at airport facilities.

9. The information processing apparatus according to claim 6,
wherein the matching unit matches passport biometrics information read from a passport at the business terminal in an airport facility and other biometrics information captured with possessor of the passport; and
wherein the issue unit associates the other biometrics information as the registered biometrics information with the business information, using the identifier which is issued when the passport biometrics information matches the other biometric information as a result of the matching.

10. The information processing apparatus according to claim 9,
wherein the matching unit acquires the passport biometrics information and the other biometrics information from any one of the business terminals that perform the business relating to a procedure of the user for departing from a country.

11. The information processing apparatus according to claim 9,
wherein the matching unit acquires the passport biometrics information and the other biometrics information from any one of the business terminals that perform the business relating to a procedure of the user for entering to a country.

12. The information processing apparatus according to any one of claims 1 to 4,
wherein the control unit causes the validity period to expire based on the gate passage information of the user at the boarding gate of the airport facility

13. The information processing apparatus according to any one of claims 1 to 12,
wherein the registered biometrics information is any of a face image, an iris image, and a fingerprint image.

14. An information processing method comprising:
issuing an identifier for associating the registered biometrics information of the user with business information related to a predetermined business; and
controlling a validity period of the identifier.

15. A storage medium storing a program that causes a computer to perform:
issuing an identifier for associating the registered biometrics information of the user with business information related to a predetermined business; and
controlling a validity period of the identifier.
